# EUROPEAN PATENT APPLICATION

(11) **EP 2 390 438 A2**
(43) Date of publication of application: **30.11.2011**
(21) Application number: 11382129.2
(22) Date of filing: 06.05.2011
(51) Int. Cl.: E04F 15/02, E04F 21/22, E04F 15/04

(54) **System for installing floorboards on battens for laying wooden floors**

(30) Priority: 07.05.2010 ES 201030679
(71) Applicant: Martin Camara, Jesus Maria, 20280 Hondarribia (Guipúzcoa) (ES)
(72) Inventor: Martin Camara, Jesus Maria, 20280 Hondarribia (Guipúzcoa) (ES)
(74) Representative: Carpintero Lopez, Francisco

(57) **Abstract**

The invention relates to a system for installing floorboards on battens for laying wood floors, comprising
battens (1) with respective recessed longitudinal slots (1a) at its top side (1b);
metal anchoring parts (2), each with a bottom portion (2a) slidable on the bottom (1c) of the slot (1a) and at least one top portion (2b) with a fastening appendage (2c) projecting from the top side (1b) of the batten (1) towards the front portion of the anchoring part (2) to become stuck in one side (3a) of a tongued and grooved floorboard (3),
the bottom portion (2a) of the anchoring part (2) comprising a front portion (2d) and two horizontal side flanges (2e, 2f) separated by a longitudinal expansion recess (2g) and provided at their edges with respective outer side toothings (2h, 2i);
the side flanges (2e, 2f) being horizontally expandable with respect to one another by action of a striking element (4) such that when they are expanded, said outer toothing (2h, 2i) becomes stuck in the corresponding side wall of the batten (1).

## Description

### TECHNICAL FIELD OF THE INVENTION

The present invention is comprised in the technical field of wood flooring and particularly in the sector of installation systems in which the boards are fixed to battens arranged on the floor.

### BACKGROUND OF THE INVENTION

During the last decades, the installation of wooden floorings has experienced a strong change adapting itself to the quickness demanded by the market, by means of floating floorings that are quickly and easy to lay and can be used immediately after installation. Although some solid factory-varnished floorboards offer some of the advantages of floating floorings, laying them is a delicate job which requires qualified and expert labor which is hard to find these days and involves high costs.

There are installation systems which partially solve this problem. The Danish company JUNCKERS markets a fixing system called the "Clip System" comprising an connecting system using metal plates of the type that are normally used for connecting floorboards installed in a floating manner. On the other hand, in wooden floorings called "Monkey-Floor", plastic battens with springs which must be installed on completely leveled surfaces are used. Nevertheless, these systems still entail a complicated and therefore expensive installation.

Spanish utility model ES-1064587-U describes an integral dismantlable and reusable system for laying tongued and grooved floorboards involving a substantial advance in systems for fixing floorboards to battens. The system comprises battens with a central longitudinal slot having a frustoconical cross section entering the top surface of the batten. Anchoring parts with a top portion with a fastening appendage emerging from the top side of the batten and which is driven into the side of a floorboard are inserted into the slot. By means of this system which allows quick installation, connection of the batten and the flooring is achieved by connection by traction. However, this system can still be improved in terms of the movement and immobilization of the anchoring parts in the slots of the battens.

### DESCRIPTION OF THE INVENTION

The object of the present invention is to overcome the drawbacks of prior art described above by means of a system for installing wooden floorings on battens for laying wooden floors, in which each batten comprises a recessed longitudinal slot within its top side and at least one metal anchoring part with a bottom portion slidable on the bottom of the slot and at least one top portion with a fastening appendage projecting from the top side of the batten and oriented coaxially with the slot towards the front portion of the anchoring part to become stuck below the longitudinal tongue of a tongued and grooved floorboard (3), characterized in that
the bottom portion of the anchoring part comprises a front portion from which two side flanges horizontal separated by a longitudinal expansion recess coaxial with the slot emerge backwards;
at least one of the side flanges comprises a side edge provided with an outer toothing;
the side flanges are expandable with respect to one another by action of a striking element such that when they are expanded, said outer toothing is stuck in the corresponding side wall of the batten.

According to the invention, the side edges of each of the two side flanges can be provided with respective outer toothings which preferably comprise teeth inclined towards the rear portion of the anchoring part.

The top portion of the anchoring part can be a plate emerging vertically from the bottom portion, with a top portion forming the nailing appendage finished in a pointed tip and protruding towards the front portion of the anchoring part. This plate can be formed from an upwardly bent portion which is the prolongation of the bottom portion of the anchoring part and it can emerge from a side recess provided in the side edge of one of the flanges, thereby providing the anchoring part with an asymmetrical configuration with respect to the location of the plate. It is also possible to provide the side edges of both flanges with respective side recesses from which respective plates emerge such that the anchoring part has a symmetrical configuration with respect to the location of the plates. This anchoring part can be manufactured in a *per* se conventional manner by die cutting steel sheet.

The longitudinal expansion recess between the side flanges of the anchoring part can be located in the central area in the bottom portion of the anchoring part. The bottom of the machined longitudinal slot in the batten can in turn be provided with a longitudinal channel for guiding the striking element towards the longitudinal expansion recess between the side flanges of the anchoring part.

The free ends of the side flanges are preferably provided with respective engagement holes. The tips of a tool, such as needle nose pliers for example, can be introduced in these holes whereby the flanges are forced to return to the non-expanded position such that the toothing or toothings come out of the corresponding wall of the slot and return from their expanded position to their initial position in which the anchoring part is again movable in the longitudinal slot of the batten.

In one embodiment of the invention, the top portion of the anchoring part is sized such that the fastening appendage becomes stuck below the longitudinal tongue of the tongued and grooved floorboard.

Respective side guiding channels horizontally penetrating the body of the batten can be provided in the bottom corners of the slot of the batten for guiding the side edges of the bottom portion of the anchoring part.

The front portion of the bottom portion of the anchoring part can have when seen in plan view a beveled front edge, which facilitates the movement of the anchoring part in the slot of the batten. That front portion can likewise have a front expansion recess extending below the fastening appendage which contributes to guiding the anchoring part in the longitudinal slot of the batten.

A fastening tool incorporating the striking element and comprising a horizontal support plate with a bottom side for supporting the fastening tool transversely on the top surface of the flooring and with a thrust body emerging from the lower area of the rear portion of the support plate and having a bottom surface for supporting the fastening tool additionally on the batten and a front vertical thrust surface can be used for installing the system according to the present invention. A striker longitudinally movable inside the body of the tool is arranged in the thrust body such that when the rear portion of the striker is tapped, for example with a mallet, the striker is moved from a retracted position where it is in the mouth of the expansion slot between the side flanges, towards an advanced position in which its front end portion is inserted in the expansion slot of the anchoring part, forcing the side flanges to separate from one another such that the toothing or toothings are stuck in the corresponding side walls of the longitudinal slot of the batten. The fastening tool can further comprise a grip attached in the top area by one end to the rear portion and by the other end to the front portion of the support plate, as well as a locking mechanism to keep the striker in the aforementioned advanced position. The handle, at least the top side of the support plate and the sides of the thrust body can be conveniently covered in plastic to give the fastening tool the suitable shape and volume for use.

The fastening tool can further comprise a prolongation lever with a rear end that can be coupled frontally to the support plate of the fastening tool, a front end provided with a protuberance with a vertical rear tapping surface, and a bottom support base by which the prolongation lever can be supported on a plurality of adjacent floorboards. This protuberance can further comprise a convex curved front portion forming a drive claw acting as a lever.

It can be understood from the preceding description that the system according to the present invention solves the problems of prior art because it allows sliding the anchoring parts in the longitudinal slot, immobilizing them after horizontal sticking, and releasing them to dismantle floorboards. It furthermore makes the installation very simple so there is no need to employ experienced workers in laying solid wooden floorings, it safeguards the visible surfaces of the wooden flooring because there is no need to drive nails by using a mallet through the visible surface, which is particularly interesting in relation with factory-varnished floorboards, and in the event that plumbing, heating or electric installations are arranged under the flooring, they prevent such installations from being damaged when "nailing the floorboards". Therefore, not only does the present invention achieve the object described above but it also provides additional advantages.

### BRIEF DESCRIPTION OF THE DRAWINGS

Aspects and embodiments of the invention are described below based on schematic drawings in which
Figure 1 is a schematic cross-section view of an embodiment of the batten according to the present invention;
Figure 2 is a partial top plan view of the batten shown in Figure 1;
Figure 3 is a front elevational view with a cross section of a floorboard that can be used within the realm of the present invention;
Figure 4 is a side elevational view of an embodiment of a clamp according to the present invention;
Figure 5 is a top plan view of the clamp shown in Figure 4;
Figure 6 is a top perspective view of the clamp shown in Figure 4;
Figure 7 is a top perspective view showing how the clamp of Figures 4 to 6 is inserted in the batten shown in Figures 1 and 2;
Figure 8 is a longitudinal section view showing the clamp of Figures 4 to 6 inserted in the batten shown in Figures 1 and 2 for fixing the floorboard shown in Figure 3;
Figure 9 is a partial top plan view showing the clamp of Figures 4 to 6 inserted in the batten of Figures 1 and 2;
Figure 10 is a view showing an embodiment of a tool for installing the floorboard corresponding to Figure 8 in one installation step;

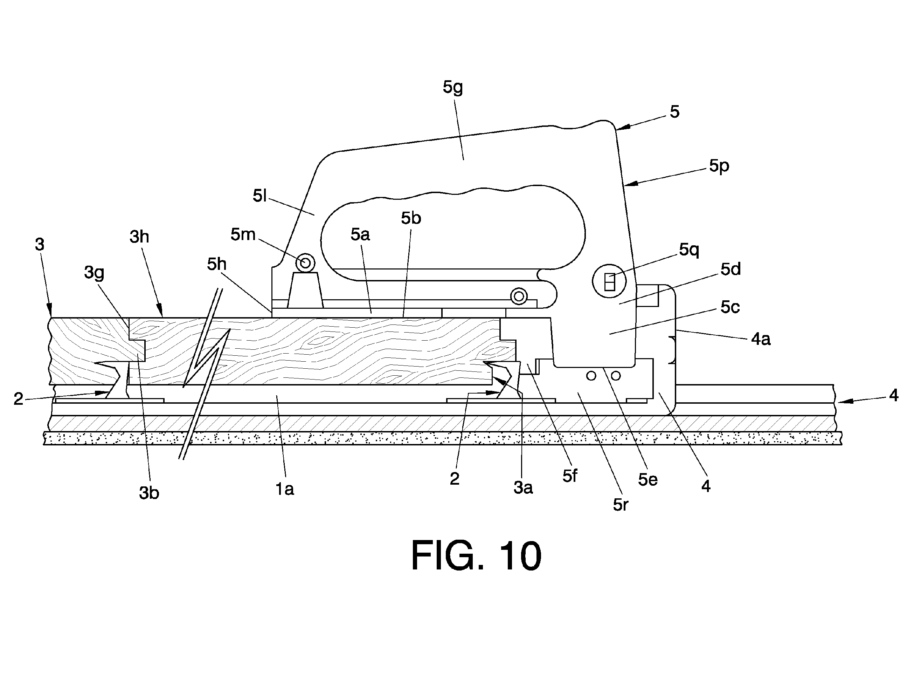

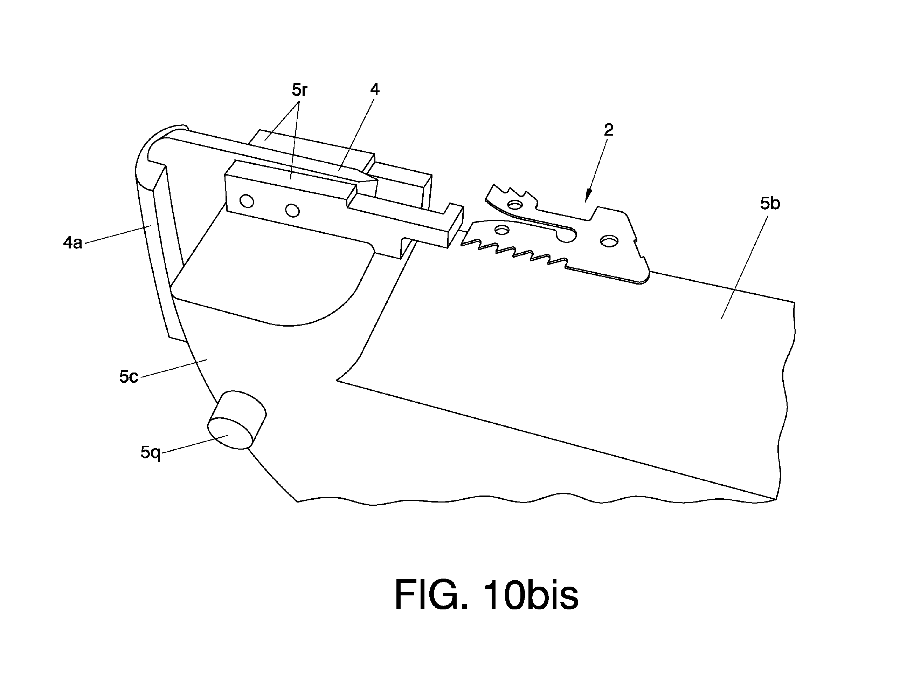

Figure 10bis is a perspective view through the bottom portion showing the arrangement of the supports and the striker of the tool, with the anchoring part in position for coupling to the tool.

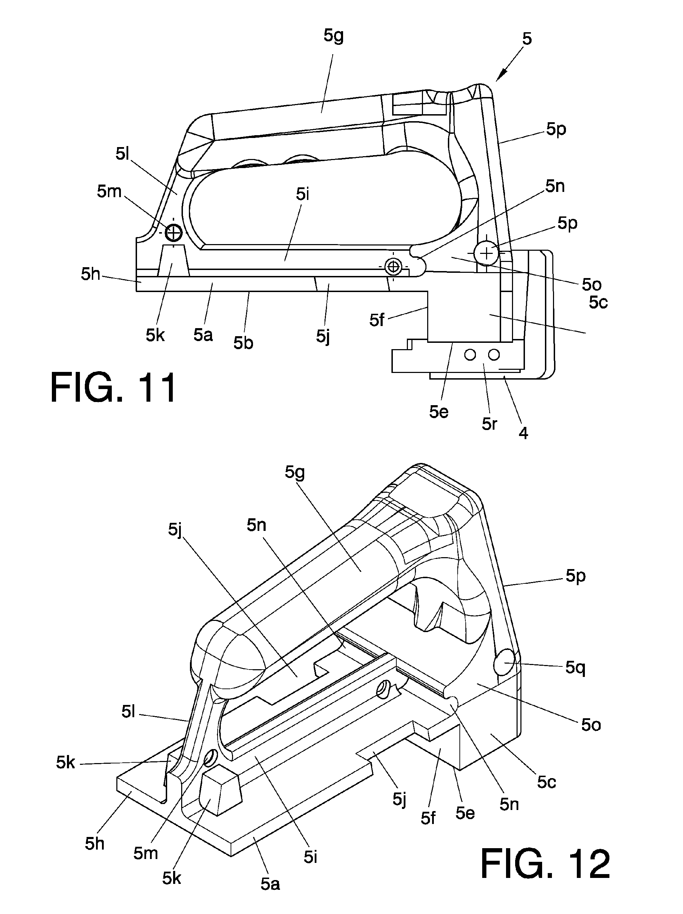

Figure 11 is a more detailed side elevational view of the tool shown in Figure 10;
Figure 12 is a front perspective view of the tool of Figure 11, without the striker mechanism;

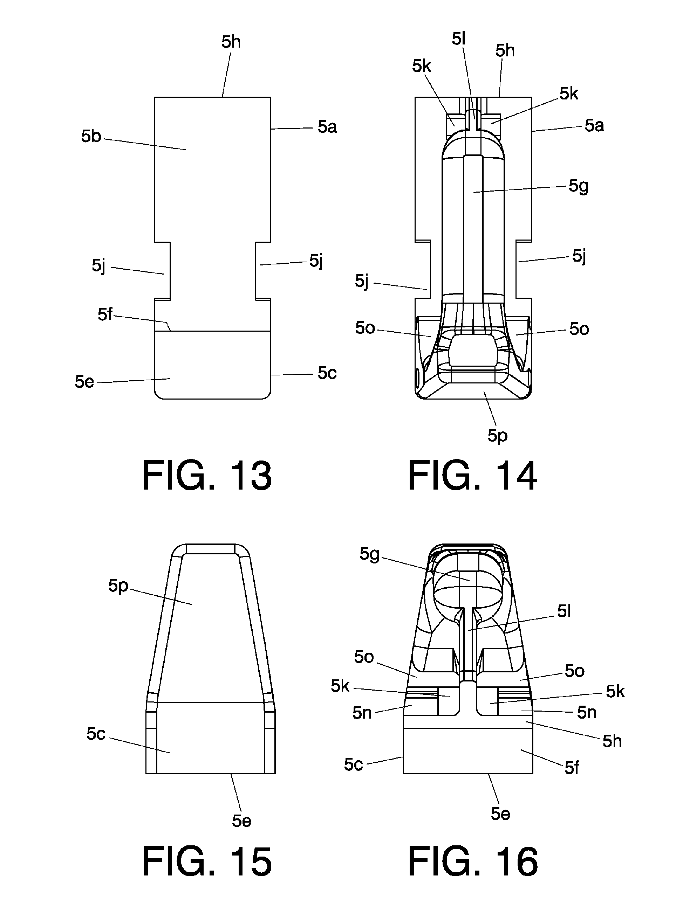

Figure 13 is a bottom plan view of the tool of Figure 12;
Figure 14 is a top plan view of the tool of Figure 12;
Figure 15 is a rear elevational view of the tool of Figure 12;
Figure 16 is a front elevational view of the tool of Figure 12;

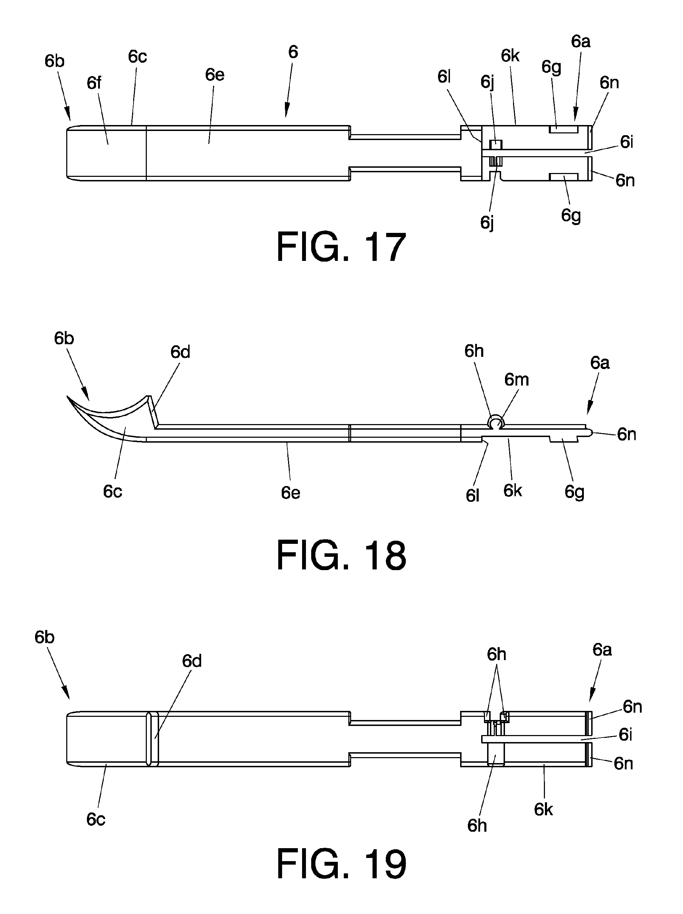

Figure 17 is a bottom plan view of an embodiment of a lever that can be applied to the tool of Figures 11-16;
Figure 18 is a side view of the lever shown in Figure 17;
Figure 19 is a top plan view of the lever shown in Figure 17;

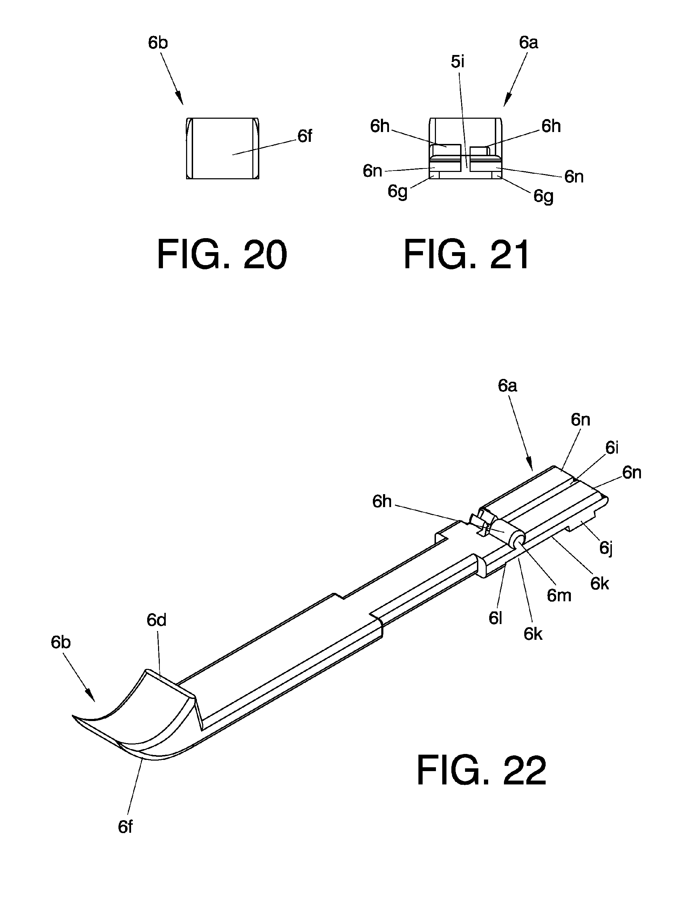

Figure 20 is a front view of the lever shown in Figure 17;
Figure 21 is a rear view of the lever shown in Figure 17;
Figure 22 is a front perspective view of the lever shown in Figure 17;

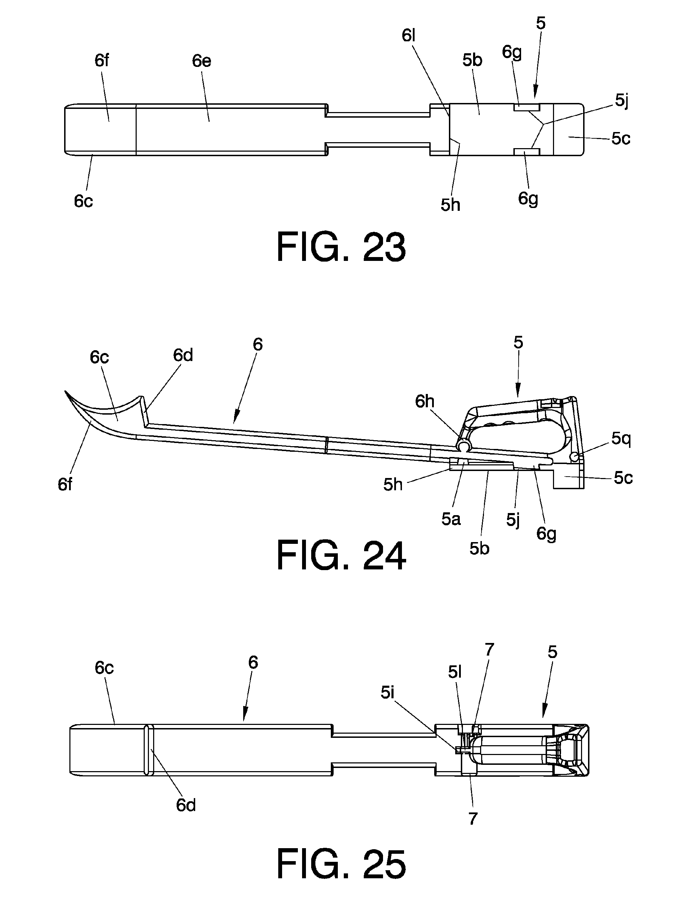

Figure 23 is a bottom plan view of the assembly formed by the lever shown in Figures 17 to 22 assembled to the tool of Figures 11-16;
Figure 24 is a bottom plan view of the assembly shown in Figure 23, though with the lever in a prior phase right before its final coupling;
Figure 25 is a top plan view of the assembly shown in Figure 23;

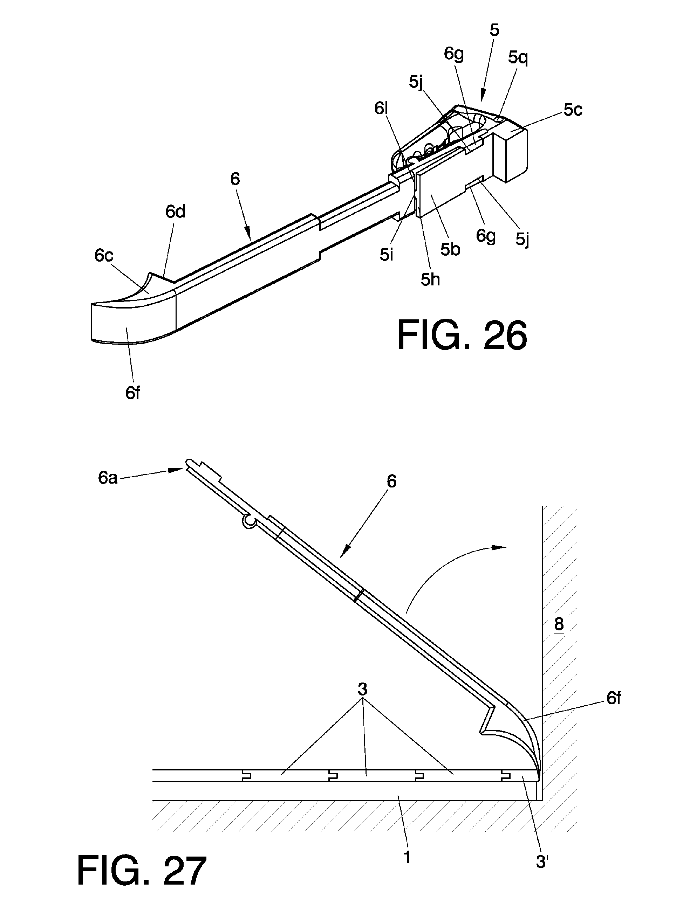

Figure 26 is a bottom and front perspective view of the assembly shown in Figure 24;
Figure 27 is a side view showing a second use of the prolongation lever.

Reference numbers identifying the following elements appear in these figures:
- 1: batten
- 1a: longitudinal slot of the batten
- 1 b: top side of the batten
- 1 c: bottom of the slot
- 1d, 1e: side guiding channels
- 1f: longitudinal channel in the bottom of the longitudinal slot
- 1g: neoprene sound insulation strips
- 1 h: insulating layer
- 2: metal anchoring part
- 2a: bottom portion of the anchoring part
- 2b: top portion of the anchoring part
- 2c: fastening appendage
- 2d: front portion of the bottom portion of the anchoring part
- 2e, 2f: side flanges of the anchoring body
- 2g: longitudinal expansion recess
- 2h, 2i: outer toothing
- 2j: pointed tip of the fastening appendage
- 2k: side recess of the anchoring part
- 21: inner edge of the side recess
- 2m: front edge of the bottom portion of the anchoring part
- 2n, 2o: free ends of the side flanges
- 2p, 2q: engagement holes in the side flanges
- 3: tongued and grooved floorboard
- 3': floorboard of the last row
- 3a: side of the tongued and grooved floorboard
- 3b: longitudinal tongue on the side of the floorboard
- 3c: lower undercutting of the longitudinal tongue
- 3d: upper undercutting of the longitudinal tongue
- 3e: longitudinal groove of the floorboard
- 4: striker
- 4a: rear portion of the striker
- 5: fastening tool
- 5a: horizontal support plate
- 5b: bottom side of the support plate
- 5c: thrust body
- 5d: rear portion of the support plate
- 5e: bottom surface of the thrust body
- 5f: thrust surface of the thrust body
- 5g: grip of the fastening tool
- 5h: front portion of the support plate
- 5i: central vertical rib in the support plate
- 5j: side notches in the support plate
- 5k: front projections in the support plate
- 5l: front section of the grip
- 5m: transverse through hole
- 5n: transverse concave recesses
- 5o: transverse block
- 5p: tapping surface
- 5q: locking bolt
- 5r: metal supports between which the striker -4- moves
- 6: prolongation lever
- 6a: rear end of the lever
- 6b: front end of the lever
- 6c: protuberance
- 6d: tapping surface
- 6e: bottom support base
- 6f: convex curved front portion
- 6g: bottom side projections
- 6h: transverse bosses
- 6i: central notch
- 6j: side housings
- 6k: rear area
- 61: transverse step
- 6m: transverse passage
- 6n: convex rear edges
- 7: transverse pin
- 8: wall

### WAYS OF CARRYING OUT THE INVENTION

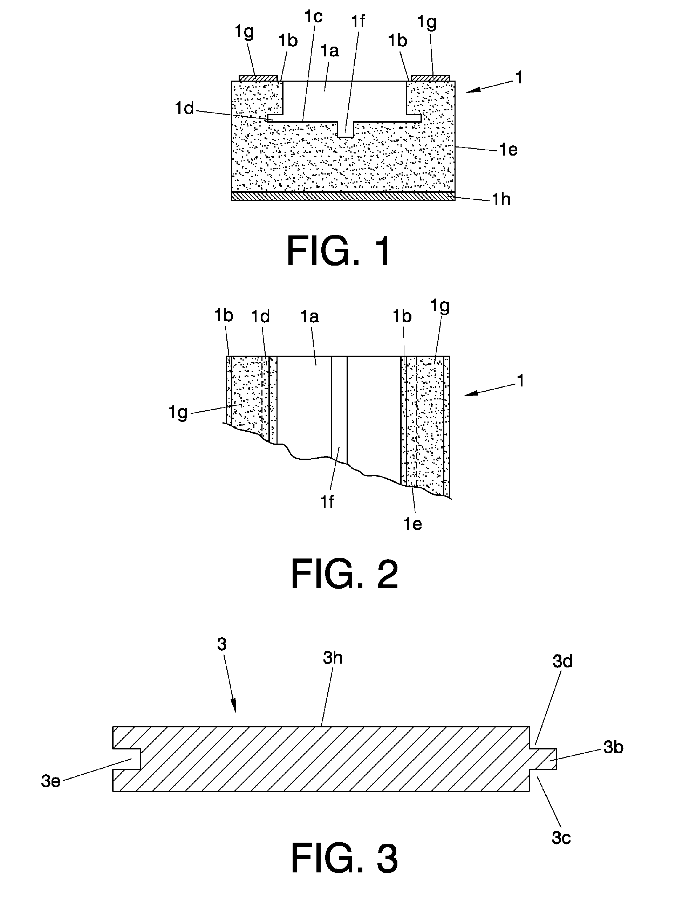

In the embodiment of the batten -1- shown in Figures 1 and 2, it comprises a recessed longitudinal slot -1 a- in its top side -1b-. The bottom -1b- of the slot -1 a- of the batten -1- comprises a longitudinal channel -1f-. In the bottom corners of the slot -1a-of the batten -1- there are respective side guiding channels -1d, 1e- horizontally penetrating into the body of the batten -1-, provided for guiding the side edges of the bottom portion -2a- of the anchoring part -2-. Two sound insulation strips -1g- are provided on the top side -1b- of the batten -1-, one at each side of the slot -1a-, on which the floorboards are supported. The bottom base of the batten -1- is in turn provided with an insulating layer -1 h- by means of which the batten 1- is supported on the floor.

An embodiment of a conventional tongued and grooved floorboard -3- which is provided respectively with a longitudinal tongue -3b- defined between a lower undercutting -3c- and an upper undercutting -3d- and a longitudinal groove -3e- can be seen in Figure 3.

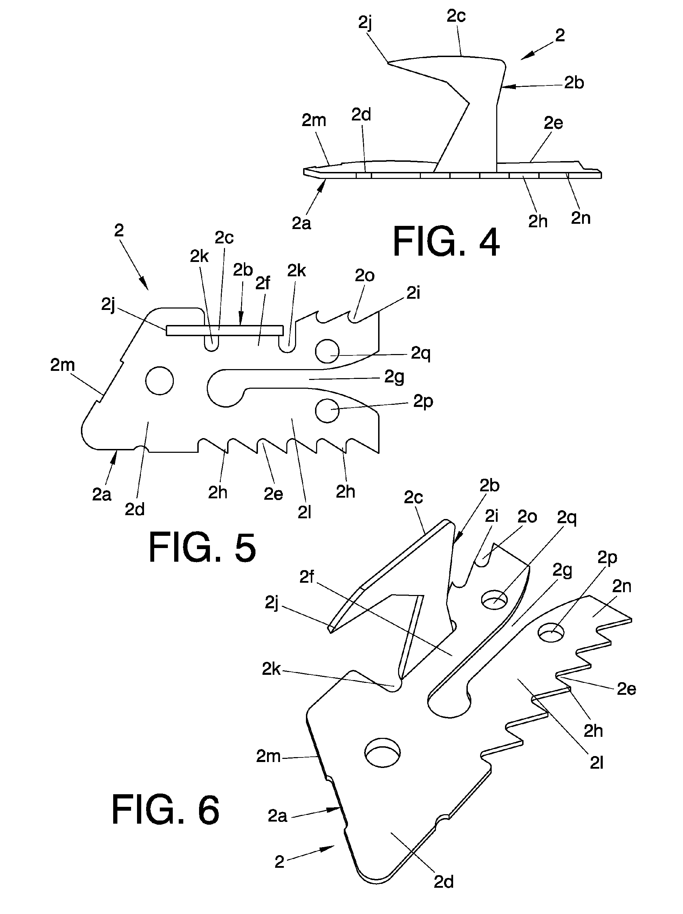

Figures 4 to 6 show an embodiment of a metal anchoring part -2- in the form of a clamp with a bottom portion -2a- and a top portion -2b- with a fastening appendage -2c- with a pointed tip -2j- oriented towards the front portion of the anchoring parts -2-. The bottom portion -2a- of the anchoring part -2- comprises a front portion -2d- from which two horizontal side flanges -2e, 2f- separated by a longitudinal expansion recess -2g- coaxial with the slot -1 a- located in the central area in the bottom portion -2a- of the anchoring part -2- emerge backwards. The side flanges -2e, 2f- have side edges provided with respective outer toothings -2h, 2i- and are horizontally expandable with respect to one another by the action of a striking element such that when they are expanded, the side flanges -2e, 2f- and, therefore, the outer toothings -2h, 2i- are moved outwardly. The teeth of the toothings -2h, 2i- are inclined towards the rear portion of the anchoring part -2-. The front portion -2d- of the bottom portion -2a- of the anchoring part -2- has a beveled front edge -2m-. The free ends -2n, 2o- of the side flanges -2e, 2f- comprise free ends which are provided with respective engagement holes -2p, 2q- the function of which is to be able to remove the anchoring part -2- from the sides -1d- and -1 e- of the slot -1 a- by introducing the tips of a tool (such as needle nose pliers for example) so that by means of manual force the flanges -2e- and -2f-may return to the (not expanded) initial position such that the position of the anchoring part can be corrected or slid along the slot -1 a- of the batten.

The top portion -2b- of the anchoring part is a plate formed by an upwardly bent portion of the bottom portion -2a- of the anchoring part -2-. The top end portion of this plate forms the fastening appendage -2c- finished in a pointed tip -2j- and protruding towards the front portion of the anchoring part -2-. Specifically, the plate -2b- emerges vertically from the inner edge -21- of a side recess -2k- in a side flange -2f-.

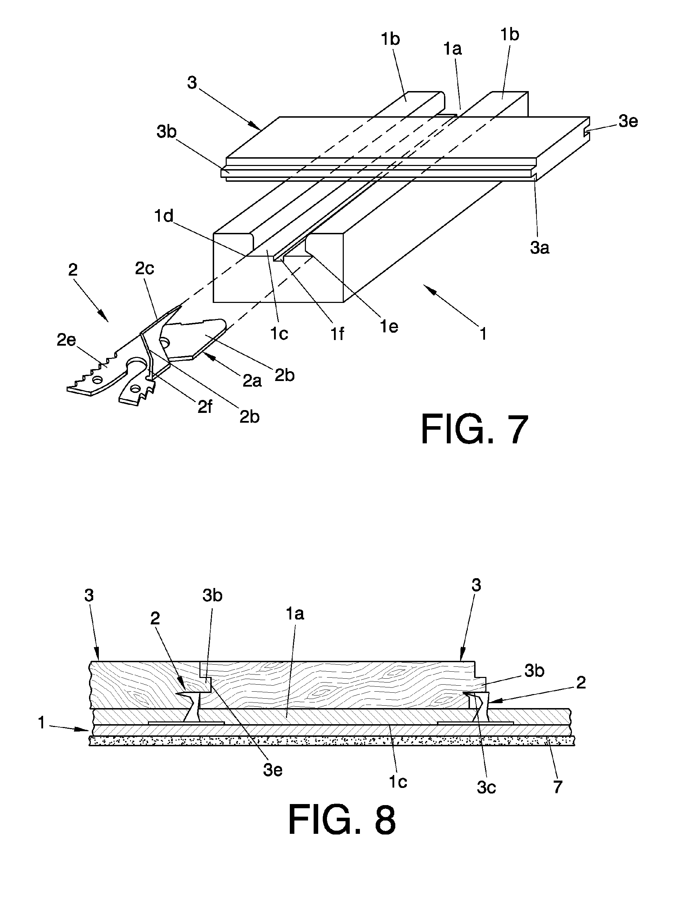

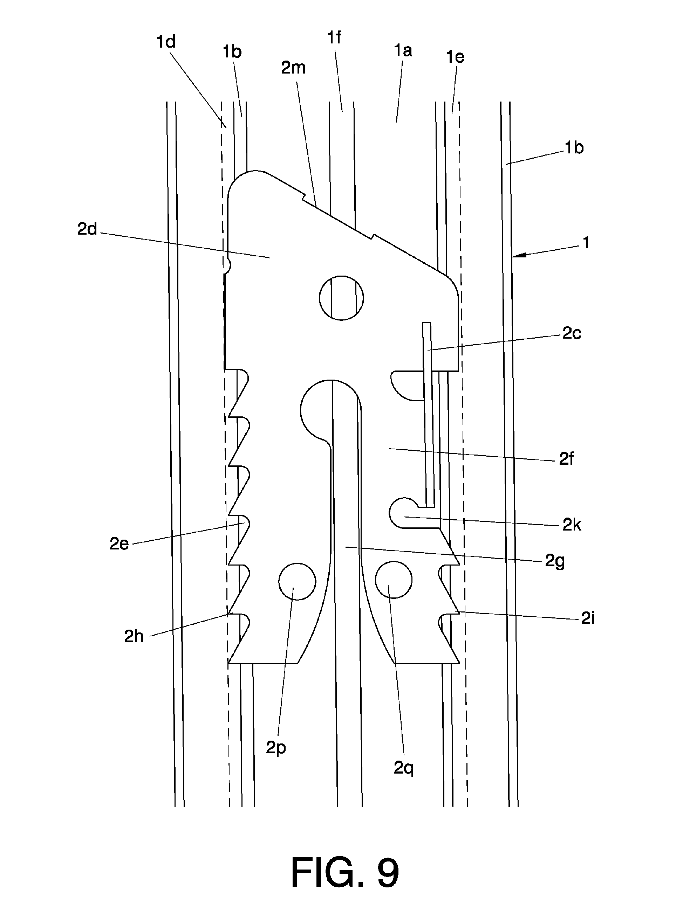

The system for installing the floorboard -3- shown in Figure 3 on the batten -1- shown in Figures 1 and 2 by means of the anchoring part -2- shown in Figures 4 to 6 can be seen in Figures 7 to 9.

The anchoring part -2- is inserted in the longitudinal slot -1a- of the batten -1- sliding it over the bottom -1c- of the longitudinal slot -1a- such that the side edges of the anchoring part are guided in the side guiding channels -1d, 1e- (Figures 1 and 3) until the pointed tip -2j- of the fastening appendage -2c- abuts against the vertical wall of the lower undercutting -3c-, below the longitudinal tongue -3b- of the floorboard -3-. When the anchoring part has reached this position, the top portion -2b- of the anchoring part -2- is tapped with a fastening tool such as the one illustrated in Figures 10 to 16, so that the fastening appendage -2c- becomes stuck in the aforementioned vertical wall of the lower undercutting -3c-. The top portion -2b- of the anchoring part -2- is sized such that the fastening appendage -2c- projecting from the top side -1 b- of the batten -1- is stuck below the longitudinal tongue -3b- of the floorboard -3-. A striking element (not shown in Figures 7 to 9) is subsequently inserted in the expansion recess -2g-. The striking element is guided by its bottom portion in the central longitudinal channel -1f- and it is wider than the expansion recess -2g-. When the striking element enters the expansion recess -2g- it thus forces the side flanges -2d, 2e- to separate one from another such that their toothings -2h, 2i- are moved outwardly and become stuck laterally in the body of the batten -1-. The anchoring body -2- is thereby immobilized in the batten -1- and secures a firm connection between the batten -1- and the floorboard -3-.

When a longitudinal groove -3e- of the next floorboard -3- is inserted on the longitudinal tongue -3b-, the fastening appendage -2c- becomes stuck in the vertical wall of the lower undercutting -3c-.

Figures 10 to 16 show an embodiment of a fastening tool -5- which can be used with the battens -1-, floorboards -3- and anchoring parts -2- described above with reference to Figures 1 to 9. As can be seen, that tool integrates the striking element -4- and comprises a horizontal support plate -5a- with a bottom side -5b- for supporting the fastening tool -5- transversely on the top side -3h- of the floorboard -3-, a thrust body -5c- emerging from the lower area of the rear portion -5d- of the support plate -5a-. The thrust body -5c- has a bottom prolongation -5e- for supporting the fastening tool -5- additionally on the batten -1- and a front vertical thrust surface -5f-. On the other hand, the thrust tool -5- has a rear tapping surface -5p- such that tapping said surface -5p- causes the forward movement of the fastening tool -5-.

The striking element -4- is longitudinally movable in the thrust body -5c-between the supports -5r- fixed and arranged on each side, by means of tapping on its rear portion -4a- emerging from the thrust body -5c-, from a retracted position in which the striker -4- is not in contact with the side flanges -2e, 2f- towards an advanced position in which the front end portion -4b- of the striker -4- is inserted in the expansion recess -2g- of the anchoring part -2- thus forcing the side flanges -2e, 2f- to separate from one another for making said toothings -2h, 2i- to become stuck in the respective side walls of the longitudinal slot -1 a- of the batten -1-. The striker -4- is lockable in its advanced position by means of a conventional locking mechanism including a locking bolt -5q-, the usefulness of which will be clarified below.

The use of the aforementioned bolt -5q- for locking the movement of the striker -4- is for the operation of fastening the clamps or anchoring parts -2- in the floorboards -3- close to the wall when the tool -5- cannot be tapped and the lever must be coupled.

After performing the indicated steps of placing the floorboards -3- on the batten -1- and the anchoring parts -2- inside the slot -1 a-, the assembly of the fastening tool -5- with the lever -6- will be positioned. The impossibility of tapping the tool -5- itself makes it necessary to use another tapping area in -6d- arranged on the lever -6-. First -6d- will be tapped, whereby dragging of the assembly of the tool -5- with the lever -6-is achieved, so that the edges of the supports -5r- tap the anchoring part -2- becoming stuck in the floorboard by its top appendage -2b-. Then in a second operation, the bolt -5q- is acted on for locking the striker -4- so it cannot be moved such that when upon carrying out a second tap on -6d- again, the striker -4- is moved integrally with the tool -5- and lever -6-, entering the expansion recess - 2g- and forcing the side flanges -2d- and -2e- to separate one from another and becoming stuck in the side of the channel of the batten -1- to immobilize it in that position.

The fastening tool -5- depicted in Figures 11 and 12 comprises a grip -5g-attached in the top area by its rear end to the rear portion -5d-. The front section -51- of the grip -5g- is attached to a vertical rib -5i- emerging centrally from the top side of the support plate -5a- below the grip and extending up to the front portion -5h- of the support plate -5a-. Close to the thrust body -5c-, the support plate -5a- has respective side notches -5j-, whereas in the area in which the front section -5l- of the grip -5g-converge with the vertical rib -5i-, respective front projections -5k- emerging from the top side of the support plate -5a- and integral, with the vertical rib -5i- are provided. Above the front projections, the front section -5l- of the grip -5g- has a transverse through hole -5m- for the passage of a pin (not shown in Figures 11-16) the function of which will be explained below in the present specification. The rear end of the central vertical rib -5i- is connected centrally to a transverse block -5o- having respective transverse concave recesses arranged at the sides of the central vertical rib -5i-.

The support plate -5a-, the thrust body -5c-, the grip -5g- and the transverse block -5o- can be made of a monoblock formed by inner metal plates covered with plastic, in which the rear tapping surface -5p- is also made.

The fastening tool -5- is used as follows when installing the floorboards -3-:

The fastening tool -5- is positioned by supporting its base -5b- on the floorboard -3- to be laid, such that the tool is frontally supported against the longitudinal tongue of the floorboard -3-, and the assembly of the metal supports -5r- of the tool -5-, together with the striker -4- arranged between the aforementioned supports, are positioned inside the slot -1 a-, maintaining the anchoring part or clamp -2- previously introduced in the slot -1a- of the batten -1- between the metal plate -5r- and the floorboard -3-. The bottom surface -5e- of the thrust body -5c- rests on the top side -1 b- of the batten -1-, the thrust surface -5f- of the thrust body -5c- contacts the rear portion of the fastening appendage -2c- and the guiding rib -4c- of the striker -4- is introduced in the longitudinal channel -1f- in the bottom -1c- of the longitudinal slot -1q- of the batten -1-. Next, the movement of the striker -4- is locked and the latter is tapped, for example with a mallet, on the rear side of the tool -5p-, whereby movement of the tool on the surface of the floorboard -3- is achieved and, by means of the front edges of the supports -5r- arranged on each side of the striker -4-, the rear edges of the base of the fastening part -2- are acted on, thus moving it so that a pointed top appendage -2j- to become stuck in the wall -3f- below the longitudinal tongue -3b- of the contacting floorboard -3-. Then the locking mechanism of the striker -4- is released by extracting the locking bolt -5q-, and the rear portion -4a- of the striker -4- is tapped, for example also with a mallet, such that the front portion -4b- of the striker -4- penetrates into the longitudinal expansion recess -2g-, forcing the side flanges -2e, 2f- to separate from one another and their outer toothings -2h, 2i- to become stuck laterally in the wall of the longitudinal slot -1 a- of the batten -1-. The floorboard -3- is thereby laid and fixed.

Figures 17 to 26 show a prolongation lever -6- with a rear end -6a- that can be coupled frontally to the support plate -5a- of the fastening tool -5-, a front end -6b-provided with a protuberance -6c- with a vertical rear tapping surface -6d- and a bottom support base -6e- by which the prolongation lever -6- can be supported on a plurality of adjacent floorboards -3-. The protuberance -6c- further comprises a convex curved front portion -6f- forming a drive claw such as that which wrecking bars usually have.

The bottom support base -6e- is undercut in the lower area in the rear area -6k-of the lever -6-. The rear area -6k- is longitudinally delimited between two convex rear edges -6n- of the rear end -6a- and a transverse step -61-. Close to the rear end -6a- of the lever -6-, the rear area -6k- has two side projections -6g- emerging from the lower area of the support base -6e-. The rear area -6k likewise comprises a central notch -6i-entering by the convex rear edge -6n- of the rear area -6k- from the rear end -6a- and extending towards the front end -5b- of the lever -6- up to the transverse step -6l-where side housings -6j- extending respectively towards the right and towards the left from the central notch -6i- are provided. Transverse bosses -6h- defining a transverse passage -6m- between each other for the pin mentioned before in relation with the transverse hole -5m- in the front section -5l- of the grip -5g- of the fastening tool -5- are located on the top side of the rear area -6k- and substantially above the side housings -6j-.

As can be seen in Figures 17 to 21, in the rear area -6k- of the lever:
the central notch -6i- is sized to laterally brace the central vertical rib -5i- on the support plate -5a- of the fastening tool -5-;
the side projections -6g- fit in the side notches -5j- of the support plate -5a- of the fastening tool -5-;
the transverse step -61- coincides with the front edge of the front portion -5h- of the support plate -5a- of the fastening tool -5-;
the side housings -6j- are sized and located for housing the front projections -5k- of the support plate -5a- of the fastening tool -5-;
the inner passage formed by the transverse bosses -6h- coincides with the transverse hole -5m- in the front section -5l- of the grip -5g- of the fastening tool -5- such that when the lever -6- is coupled to the fastening tool -5-, the coupling can be fixed by passing a pin -7- through said inner passage and the transverse hole -5m-; and
the convex rear edges -6n- fit in the respective transverse concave recesses -5n- of the fastening tool -5-.

All that allows that when the lever -6- is coupled to the fastening tool -5-, the bottom side -5b- of the support plate -5a- of the fastening tool -5- and the bottom support base -6e- of the lever -6- are flush and form a planar bottom support surface.

The following is performed to couple the prolongation lever -6- to the fastening tool -5-:
First the front end -6a- is raised and the central notch -6i- of the rear end -6a-is inserted over the front section -5l- of the grip -5g- of the fastening tool -5-. Then the raised lever -6- is pushed until its convex rear edges -6n- enter the respective transverse concave recesses -5n- of the fastening tool -5-, and the front end -6a- of the lever -6- is lowered such that
   the central vertical rib -5i- of the fastening tool -5- becomes inserted in the central notch -6i- of the lever 6,
   the bottom side projections -6g- of the lever -6- become inserted in the side notches -5j- of the support plate -5a- of the fastening tool -5-,
   the front projections -5k- of the support plate -5a- of the fastening tool -5- become inserted in the respective side housings -6j- of the lever -6-, and
   the transverse passage -6m- formed by the transverse bosses -6h- of the lever is aligned with the transverse through hole -6m- in the front section -5l- of the grip -5a-of the fastening tool -5-.

Finally, the pin -7- is introduced through the passage formed by the transverse passage -6m- and the transverse through hole -5m-, and the pin -7- is secured such that the lever -6- is firmly coupled to the fastening tool -5-.

The prolongation lever -6- has a dual function, namely, a first function when installing floorboards -3- close to a wall where there is no space for performing the taps respectively intended for fastening the fastening appendage -2c- in the floorboard -3- and the outer toothings -2h, 2i- in the batten -1-, and a second function as a lever for laying final rows, i.e., the last floorboards between the wall and the flooring already laid.

For performing the first function, the lever -6- is coupled to the fastening tool -5-. First, the fastening tool -5- is placed on the floorboard 3- to be installed and the corresponding batten -1- as described above. As the lever -6- is coupled to the fastening tool -5-, the bottom side -5b- of the support plate -5a- of the fastening tool -5- and the bottom support base -6e- of the lever -6- are supported on a plurality of already laid rows of floorboards -3- forming a flooring. With the assembly tool/lever in this position, a first tap is made on the tapping surface -6d- in the lever -6-, whereby the impact is transferred by means of the metal supports -5r- to the fastening appendage -2c- which is then stuck in the vertical wall -3f- of the lower undercutting -3c- of the longitudinal tongue -3b- of the side -3a- of the floorboard -3-. Then, the assembly tool/lever is moved backwards, and the striker -4- is locked such that when the tapping surface -6d- of the lever -6- is tapped again, it is the front portion -4b- of the striker -4- that performs its function by penetrating into the longitudinal expansion recess -2g- and forcing the side flanges -2e, 2f- to separate from one another and their outer toothings -2h, 2i- to become stuck laterally in the wall of the longitudinal slot -1a-of the batten -1-, whereby it is accomplished that the floorboard -3- becomes laid and fixed.

For performing the second function as a conventional wrecking bar, the lever -6- is preferably decoupled from the fastening tool -5-. As can be seen in Figure 27, with the lever -6- placed at about 45°, the tip of its convex curved front portion -6f- is introduced in the gap between the floorboard of the last row -3'- such that the convex curved portion is facing the wall -8-. Then the rear portion -6a- of the lever -6- is raised, whereby the convex curved front portion -6f- is progressively supported against the wall -8- such that its tip progressively thrusts the floorboard of the last row -3'- against the previously laid floorboards -3- such that the latter fit tighter with one another.

## Claims

1. System for installing floorboards on battens for laying wooden floors, comprising at least one batten (1) with a recessed longitudinal slot (1a) at its top side (1 b) and at least one metal anchoring part (2) with a bottom portion (2a) slidable on the bottom (1c) of the slot (1a) and at least one top portion (2b) with a fastening appendage (2c) projecting from the top side (1b) of the batten (1) and oriented coaxially with the slot (1a) towards the front portion of the anchoring part (2) to be stuck in one side (3a) of a tongued and grooved floorboard (3), **characterized in that**
the bottom portion (2a) of the anchoring part (2) comprises a front portion (2d) from which two horizontal side flanges (2e, 2f) separated by a longitudinal expansion recess (2g) coaxial with the slot (1a), emerge backwards;
at least one of the side flanges (2e, 2f) comprises a side edge provided with an outer toothing (2h, 2i);
the side flanges (2e, 2f) are horizontally expandable with respect to one another by the action of a striking element (4) such that when they are expanded, said outer toothing (2h, 2i) becomes stuck in the corresponding side wall of the batten (1).

2. System for installing floorboards according to claim 1, **characterized in that** each of the side flanges (2e, 2f) comprises a side edge provided with an outer toothing (2h, 2i).

3. System for installing floorboards according to claim 1 or 2, **characterized in that** the outer toothing (2h, 2i) comprises teeth inclined towards the rear portion of the anchoring part (2).

4. System for installing floorboards according to claim 1, 2 or 3, **characterized in that** the top portion (2b) of the anchoring part is a plate emerging vertically from the bottom portion (2a) of the anchoring part (2) and the top end portion of which forms the fastening appendage (2c) ending in a pointed tip (2j) and protruding towards the front portion of the anchoring part (2).

5. System for installing floorboards according to claim 4, **characterized in that** the plate is an upwardly bent portion of the bottom portion (2a) of the anchoring part (2).

6. System for installing floorboards according to claim 4 or 5, **characterized in that** the side edge of at least one (2e) of the side flanges (2e, 2f) comprises a side recess (2k) with an inner edge (2l) from which the plate emerges.

7. System for installing floorboards according to one of the preceding claims, **characterized in that** the front portion (2d) of the bottom portion (2a) of the anchoring part (2) has a beveled front edge (2m).

8. System for installing floorboards according to one of the preceding claims, **characterized in that** the side flanges (2e, 2f) comprise free ends (2n, 2o) with respective engagement holes (2p, 2q).

9. System for installing floorboards according to one of the preceding claims, **characterized in that** the front portion (2d) of the bottom portion (2a) of the anchoring part (2) comprises a front expansion recess extending below the fastening appendage (2c).

10. System for installing floorboards according to one of the preceding claims, **characterized in that** the longitudinal expansion recess (2g) is located centrally in the bottom portion (2a) of the anchoring part (2).

11. System for installing floorboards according to one of the preceding claims, **characterized in that** the top portion (2b) of the anchoring part (2) is sized such that the fastening appendage (2c) sticks below the longitudinal tongue (3b) on the side (3a) of the floorboard (3).

12. System for installing floorboards according to claim 11, **characterized in that** the floorboard (3) comprises a lower undercutting (3c) of the longitudinal tongue (3b) longer than its upper undercutting (3d), the lower undercutting (3c) being sized such that when a longitudinal groove (3e) of another floorboard (3) is inserted on the longitudinal tongue (3b), the fastening appendage (2c) stuck in the vertical wall (3f) of the lower undercutting (3c) becomes arranged between said vertical wall (3f) and the side (3a) of said other floorboard (3), whereas the top side portions (3g) of said floorboards (3) contact one another.

13. System for installing floorboards according to one of the preceding claims, **characterized in that** in the bottom corners of the slot (1a) of the batten (1) there are respective side guiding channels (1d, 1e) horizontally penetrating into the body of the batten (1), provided for guiding the side edges of the bottom portion (2a) of the anchoring part (2).

14. System for installing floorboards according to one of the preceding claims, **characterized in that** the bottom (1b) of the slot (1a) of the batten (1) comprises a longitudinal channel (1f) for guiding the striking element (4) towards the longitudinal expansion recess (2g) between the side flanges (2e, 2f) of the anchoring part (2).

15. System for installing floorboards according to one of the preceding claims, **characterized in that** comprises a fastening tool (5) integrating the striking element (4) and comprising
a horizontal support plate (5a) with a bottom side (5b) for supporting the fastening tool (5) transversely on the top surface (3h) of the floorboard (3);
a thrust body (5c) emerging from the lower area of the rear portion (5d) of the support plate (5a) and having a bottom surface (5e) for supporting the fastening tool (5) additional on the batten (1) and on a front vertical thrust surface (5f);
a striker (4) longitudinally movable in the thrust body (5c) by means of tapping its rear portion (4a) emerging from the thrust body (3c), from a retracted position in which the striker (4) is not in contact with the side flanges (2e, 2f) towards an advanced position in which its front end portion (3b) is inserted in the expansion recess (2g) of the anchoring part (2), forcing the side flanges (2e, 2f) to separate one from the other for making said at least one toothing (2h, 2i) stick in the corresponding side wall of the longitudinal slot (1a) of the batten (1).

16. System for installing floorboards according to claim 15, **characterized in that** the fastening tool (5) comprises a grip (5g) attached in the top area by one end to the rear portion (5d) and by the other end to the front portion (5h) of the support plate (5a).

17. System for installing floorboards according to claim 15 or 16, **characterized in that** comprises a locking mechanism to keep the striker (4) in said advanced position.

18. System for installing floorboards according to claim 17, **characterized in that** the fastening tool further comprises a prolongation lever (6) with a rear end (6a) that coupable frontally to the support plate (5a) of the fastening tool (5), a front end (6b) provided with a protuberance (6c) with a vertical rear tapping surface (6d), and a bottom support base (6e) by which the prolongation lever (6) can be supported on a plurality of adjacent floorboards (3).

19. System for installing floorboards according to claim 18, **characterized in that** the protuberance (6c) comprises a convex curved front portion (6f) forming a drive claw.
